# EUROPÄISCHE PATENTSCHRIFT

(11) **EP 3 084 385 B1**
(45) Veröffentlichungstag und Bekanntmachung des Hinweises auf die Patenterteilung: **21.02.2018**
(21) Anmeldenummer: 14793830.2
(22) Anmeldetag: 29.10.2014
(51) Int. Cl.: G01J 1/42, G01B 11/27, G06K 9/00, G01M 11/06, B60Q 1/10

(54) **VERFAHREN UND VORRICHTUNG ZUM BESTIMMEN EINER LEUCHTWEITENAUSRICHTUNG EINES SCHEINWERFERS**
METHOD AND DEVICE FOR DETERMINING A BEAM WIDTH ALIGNMENT OF A HEADLIGHT
PROCÉDÉ ET DISPOSITIF DE DÉTERMINATION D'UNE ORIENTATION DE FAISCEAU DE LUMIÈRE D'UN PROJECTEUR

(30) Priorität: 19.12.2013 DE 102013226788; 23.09.2014 DE 102014219120
(43) Veröffentlichungstag der Anmeldung: 26.10.2016
(73) Patentinhaber: Robert Bosch GmbH, 70442 Stuttgart (DE)
(72) Erfinder: GEESE, Marc, 70839 Gerlingen (DE); FOLTIN, Johannes, 71254 Ditzingen (DE); STIERLIN, Susanne, 71229 Leonberg (DE)
(86) Internationale Anmeldenummer: PCT/EP2014/073173
(87) Internationale Veröffentlichungsnummer: WO 2015/090699

(56) Entgegenhaltungen:
- EP-A1- 2 128 590
- EP-A1- 2 204 771
- DE-A1-102008 011 699
- DE-A1-102008 060 949
- DE-A1-102011 017 697
- DE-A1-102011 109 440
- JP-A- 2013 031 053
- US-A1- 2007 230 199

## Beschreibung

Die vorliegende Erfindung betrifft ein Verfahren zum Bestimmen einer Leuchtweitenausrichtung von mindestens einem ersten Scheinwerfer eines Kraftfahrzeugs. Die Erfindung betrifft ferner eine Steuer- und Auswerteeinheit zum Bestimmen der Leuchtweitenausrichtung. Schließlich betrifft die Erfindung ein entsprechendes Computerprogrammprodukt zum Durchführen des Verfahrens.

### Stand der Technik

Die DE 10 2011 017 697 A1 beschreibt ein Verfahren zur Leuchtweitenregulierung zumindest eines Scheinwerfers eines Fahrzeugs. Dabei wird eine Koordinate zumindest eines vordefinierten Helligkeitsübergangs in einem Kamerabild bestimmt. Die EP 2 128 590 A1 beschreibt ein Verfahren zum Kalibrieren mindestens einer durch mindestens einen Frontscheinwerfer eines Fahrzeugs erzeugten horizontalen Hell-Dunkel-Grenze. Die DE 10 2008 011699 A1 beschreibt ein Verfahren zur Bestimmung einer Eigenschaft für den Betrieb eines Kraftfahrzeugs bei dem von einem Scheinwerfer ein Muster auf einer Fahrbahn vor dem Kraftfahrzeug erzeugt wird. Die EP 2 204 771 A1 beschreibt ein Verfahren zum Ermitteln einer Änderung des Nickwinkels einer Kamera eines Fahrzeugs. Die DE 10 2011 109440 A1 beschreibt ein Verfahren zum Justieren zumindest eines Scheinwerfers eines Fahrzeugs.

Das Bestimmen der Leuchtweitenausrichtung ermöglicht es festzustellen, ob der jeweilige Scheinwerfer korrekt justiert ist. Bei Scheinwerfern unterschiedlicher Bauweisen kann es aufgrund von Alterungs- und Verschleißerscheinungen zu Fehljustagen kommen. Eine Fehljustage des Scheinwerfers kann insbesondere in Verbindung mit adaptiven Fernlichtsystemen wie AHC (adaptive high beam control, auch "gleitende Leuchtweite" oder "adaptive Hell-Dunkel-Grenze" genannt) und CHC (continuous high beam control, auch "blendfreies Fernlicht" genannt) zu einer Blendung weiterer Verkehrsteilnehmer führen oder dazu führen, dass einem Fahrzeugführer nicht die maximale Umgebungsausleuchtung bereitgestellt wird. Diesbezüglich wird insbesondere zwischen folgenden Fehljustagen unterschieden:
- Die Frontscheinwerfer des Kraftfahrzeugs sind nicht parallel zueinander ausgerichtet, d. h., dass Hell-Dunkel-Grenzen der beiden Scheinwerfer nicht übereinstimmen. Beispielsweise ist dies dann der Fall, wenn einer von beiden Scheinwerfern seine Hell-Dunkel-Grenze zu nah am oder zu fern vom Fahrzeug erzeugt.
- Die Frontscheinwerfer sind relativ zueinander korrekt justiert, jedoch sind die Hell-Dunkel-Grenzen aller Scheinwerfer zu nah oder zu fern vom Fahrzeug angeordnet.

Es ist somit eine Voraussetzung für das sichere Funktionieren von Scheinwerfersystemen, dass diese korrekt kalibriert sind. Dies wird häufig durch, beispielsweise jährliche, Fahrzeugkontrollen abgedeckt.

Da es sich hierbei um ein sicherheitskritisches System handelt, wäre es wünschenswert, eine möglichst häufige und autonome Kontrolle der Leuchtweitenausrichtung von mindestens einem der Scheinwerfer in einem Kraftfahrzeug realisieren zu können.

### Offenbarung der Erfindung

Dies wird nach einem Aspekt der Erfindung durch ein Verfahren der eingangs genannten Art gelöst, bei dem das Kraftfahrzeug mindestens einen optischen Sensor aufweist, der dazu ausgebildet ist, mindestens einen Teil eines ersten Leuchtbereichs des ersten Scheinwerfers zu erfassen und ein erstes Bild mit dem Teil des ersten Leuchtbereichs zu erzeugen, und das die Schritte aufweist: Einlesen des ersten Bildes des optischen Sensors, Auswählen von mindestens einem ersten Bildbereich in dem ersten Bild, wobei in dem ersten Bildbereich eine Hell-Dunkel-Grenze des ersten Scheinwerfers abgebildet wird und Bestimmen der Leuchtweitenausrichtung in Abhängigkeit des ersten Bildbereichs.

Nach einem weiteren Aspekt der Erfindung wird dies durch eine Steuer- und Auswerteeinheit der eingangs genannten Art gelöst, wobei das Kraftfahrzeug mindestens einen optischen Sensor aufweist, der dazu ausgebildet ist, mindestens einen Teil eines ersten Leuchtbereichs des ersten Scheinwerfers zu erfassen und ein erstes Bild mit dem Teil des ersten Leuchtbereichs zu erzeugen, wobei die Steuer- und Auswerteeinheit weiter dazu ausgebildet ist, das erste Bild des optischen Sensors einzulesen, mindestens einen ersten Bildbereich in dem ersten Bild zu bestimmen, in dem eine Hell-Dunkel-Grenze des ersten Scheinwerfers abgebildet sein soll, und die Leuchtweitenausrichtung in Abhängigkeit des ersten Bildbereichs zu bestimmen.

Von Vorteil ist auch das Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung basiert auf der Idee, dass die Leuchtweitenausrichtung des Scheinwerfers in Abhängigkeit der Hell-Dunkel-Grenze des Scheinwerfers über den optischen Sensor geregelt werden kann. Vorteilhaft hierbei ist es, wenn der optische Sensor eine Kamera, insbesondere eine Matrixkamera ist. Derartige Kameras sind häufig in Kraftfahrzeugen bereits verfügbar, so dass eine besonders kostengünstige und genaue Regelung erfolgen kann. Weiter bevorzugt ist es, wenn es sich bei der Kamera um eine kalibrierte Kamera handelt, deren Ausrichtung, Position und/oder relativer Lage zu den Scheinwerfern bekannt ist. Somit kann eine besonders genaue Regelung erfolgen. Alternativ oder zusätzlich kann das gesamte System bei Bedarf kalibriert werden, wobei sowohl der Sensor als auch ein Aktuator für den zumindest einen Scheinwerfer zueinander kalibriert werden.

Mit der hier vorgestellten Erfindung ist es möglich, unterschiedliche Fehljustagen von Scheinwerfern zu kalibrieren. Im Folgenden wird beispielhaft von einer typischen Ausführungsform eines Kraftfahrzeugs ausgegangen, wobei zwei Frontscheinwerfer angenommen werden können. Dies erfolgt lediglich zur klaren Formulierung der folgenden Ausführungen, eine Erweiterung auf vier oder mehr Scheinwerfer wird hiervon nicht ausgeschlossen.

Eine erste Fehljustage liegt dann vor, wenn die Scheinwerfer nicht mehr parallel zueinander ausgerichtet sind, d. h. dass die Hell-Dunkel-Grenzen der beiden Scheinwerfer nicht übereinstimmt. Beispielsweise leuchtet dann einer der beiden Scheinwerfer zu stark nach unten und/oder nach oben.

Eine zweite Fehljustage liegt dann vor, wenn die Scheinwerfer zwar parallel zueinander ausgerichtet sind, d. h. dass die Hell-Dunkel-Grenzen der beiden Scheinwerfer übereinstimmt, jedoch die Ausrichtung beider Scheinwerfer gleichartig nicht mit einer gewünschten Ausrichtung übereinstimmen. In diesem Fall leuchten beispielsweise beide Scheinwerfer stärker nach unten und/oder nach oben als gewünscht. Dies könnte zu einer Blendung anderer Verkehrsteilnehmer führen oder entsprechend eine zu geringe Sichtweite für den Fahrer zur Folge haben.

Eine dritte Fehljustage liegt dann vor, wenn eine Kombination der beiden vorgenannten Fehljustagen auftritt, bei der die Scheinwerfer sowohl nicht parallel als auch insgesamt nicht richtig eingestellt sind.

In der vorliegenden Erfindung werden zumindest Bildbereiche des ersten Bilds der Kamera ausgewertet, um die Einrichtung des mindestens einen Scheinwerfers zu ermitteln und die Fehljustage zu erkennen. Besonders bevorzugt ist es, wenn die Ausrichtung anhand der Hell-Dunkel-Grenze erfolgt, die beispielsweise mittels eines, vorzugsweise vorbestimmten, Gradienten in einer Lichtverteilung innerhalb des Bildes ermittelt werden kann. Dies ist dahingehend zu verstehen, dass der Gradient der Lichtverteilung in dem Bild an der Hell-Dunkel-Grenze einen signifikanten Sprung macht und somit einfach zu detektieren ist. Anschließend ist es möglich, die Ausrichtung des Scheinwerfers derart zu verändern, dass die tatsächliche Leuchtweitenausrichtung einer gewünschten Leuchtweitenausrichtung entspricht.

Ein besonderer Vorteil des erfindungsgemäßen Vorgehens ist es, dass beispielsweise die derzeit notwendige initiale Scheinwerferkalibrierung bei einer Fahrzeugherstellung entfallen kann. Dies ist darin begründet, dass bei ausreichend genauer Kamerakalibrierung die automatische Nachstellung der Scheinwerfer in regelmäßigen Abständen während des Betriebs des Kraftfahrzeugs erfolgt. Somit wird insgesamt die Sicherheit des Kraftfahrzeugs erhöht und gleichzeitig eine wirtschaftlichere Herstellung ermöglicht.

Zum Ermitteln einer möglichen fehlerhaften Leuchtweitenausrichtung des zumindest einen Scheinwerfers wird vorzugsweise die Hell-Dunkel-Grenze des zumindest einen Scheinwerfers zunächst aus dem ersten Bildbereich gebracht, wodurch eine Position der Hell-Dunkel-Grenze zuverlässig ermittelt werden kann. Ferner ist es denkbar, dass anschließend eine entsprechende Messung mit einem zweiten Scheinwerfer durchgeführt wird und dessen Leuchtweitenausrichtung ermittelt wird. Durch einen Vergleich der beiden Leuchtweitenausrichtungen für den ersten und für den zweiten Scheinwerfer kann zusätzlich und/oder nachträglich die Parallelität der beiden Scheinwerfer überprüft werden.

Aufgrund konstruktiver Zwangsbedingungen muss die Hell-Dunkel-Grenze bei einem kalibrierten Scheinwerfer in einem bestimmten Bereich angeordnet sein. Somit kann die Auswertung in einer vorteilhaften Ausbildung derart erfolgen, dass nur ein relativ schmaler Bereich innerhalb des ersten Bilds als erster Bildbereich ausgewertet wird. Dies ist vorzugsweise der erste Bildbereich, in dem die Hell-Dunkel-Grenze bei korrekter Ausrichtung angeordnet sein müsste. Um dies zu erfassen, werden die vorzugsweise parallel ausgerichteten Scheinwerfer ausgehend von einer ursprünglichen Leuchtweitenausrichtung gemeinsam in ihrer Leuchtweitenausrichtung verändert. In dem ersten Bildbereich wird dann nach dem stärksten Übergang, also dem größten Gradienten, gesucht. Dies kann beispielsweise ein Maximalwert in einem Gradientenbild sein. Sobald der stärkste Übergang gefunden ist, kann die aktuelle Leuchtweitenausrichtung mit der ursprünglichen Leuchtweitenausrichtung verglichen werden, um eine Fehljustage und/oder die Art der Fehljustage zu ermitteln.

Während eines Betriebs des Kraftfahrzeugs befindet sich das Kraftfahrzeug typischerweise auf unterschiedlichen Arten von Oberflächen, die unterschiedliche streuende und reflektierende Eigenschaften aufweisen. Die Hell-Dunkel-Grenze kann, je nach Entfernung, Streuverhalten und/oder Reflektierverhalten der jeweiligen reflektierenden Oberfläche, nur schwer erkennbar sein. Entsprechend der Oberfläche kann die Hell-Dunkel-Grenze dann mit einer verminderten Genauigkeit ermittelbar sein. Eine verschlechterte Sichtbarkeit ist wesentlich in dem fotometrischen Entfernungsgesetz begründet, das eine quadratische Abhängigkeit der Helligkeit von der Entfernung beschreibt. Durch die im Betrieb relativ große Entfernung zwischen Hell-Dunkel-Grenze und dem Sensor selbst wird der Unterschied zwischen dem Leuchtbereich und einem nicht beleuchteten Umgebungsbereich sehr klein. Je größer die Hell-Dunkel-Grenze von dem Sensor beabstandet ist, desto größer ist der Einfluss des Streuverhaltens und/oder des Reflektierverhaltens der Oberfläche. Ferner steigt ein Einfluss einer möglichen Oberflächenkrümmung, was zu einer weiter verschlechterten Sichtbarkeit der Hell-Dunkel-Grenze führen kann. Daher ist es bevorzugt, wenn der zumindest eine Scheinwerfer beim Bestimmen der Leuchtweitenausrichtung zunächst zumindest teilweise abgesenkt wird. Hieraus ergibt sich eine schnellere und einfachere Bestimmung der Leuchtweitenausrichtung, wobei gleichzeitig eine höhere Genauigkeit erreicht wird.

Ferner ist es denkbar, die Bestimmung der Leuchtweitenausrichtung bei einem Initial-Lauf von Scheinwerfern durchzuführen. Dieser Initial-Lauf ist beispielsweise bei Xenonlichtern bekannt. Ein besonderer Vorteil hierbei ist es, dass die Leuchtweitenausrichtung besonders stark reduziert werden kann, ohne dass für den Fahrer sicherheitsrelevante Probleme auftreten.

Das hier beschriebene erfindungsgemäße Verfahren kann nicht nur zum Erkennen der typischen horizontalen Hell-Dunkel-Grenze angewendet werden. Dies liegt beispielsweise bei einem typischen Abblendlicht vor. Alternativ oder zusätzlich kann das hier beschriebene Verfahren auch dazu eingesetzt werden, um eine vertikale oder teilweise horizontal und teilweise vertikal ausgerichtete Hell-Dunkel-Grenze in ihrer Leuchtweitenausrichtung zu bestimmen. Dies ist beispielsweise bei einem blendfreien Fernlicht der Fall, das als Aktuatoren Schwenkmotoren aufweist und/oder einen Matrixbeam aufweist, welcher selektiv Umgebungsbereiche lichttechnisch aussparen kann.

Die Leuchtweitenausrichtung ist dabei typischerweise definiert durch einen Abstand der Hell-Dunkel-Grenze von dem zumindest einen Scheinwerfer. Ferner ergibt sich der Leuchtbereich daraus, wo von dem zumindest einen Scheinwerfer ausgesendetes Licht reflektiert wird.

Insgesamt ergibt sich somit ein Verfahren, durch das die Leuchtweitenausrichtung des Scheinwerfers in Kraftfahrzeugen in einfacher Weise bestimmt werden kann. Insgesamt wird somit die Sicherheit und wirtschaftliche Herstellung von Kraftfahrzeugen verbessert.

In einer bevorzugten Ausgestaltung sind die zusätzlichen Schritte vorgesehen: Auswählen von mindestens einem zweiten Bildbereich in dem ersten Bild, in dem ein Teil des ersten Leuchtbereichs abgebildet sein soll, und/oder von mindestens einem dritten Bildbereich, in dem ein Bereich außerhalb des Leuchtbereichs abgebildet sein soll, und Bestimmen der Leuchtweitenausrichtung in Abhängigkeit des zweiten und/oder dritten Bildbereichs.

In dieser Ausgestaltung sind zumindest ein zusätzlicher zweiter Bildbereich und/oder ein zusätzlicher dritter Bildbereich vorgesehen, die zusätzlich zu oder gemeinschaftlich mit dem ersten Bildbereich ausgewertet werden. Besonders bevorzugt ist es, wenn sich die zusätzlichen Bildbereiche jeweils an den ersten Bildbereich, vorzugsweise oberhalb und/oder unterhalb des ersten Bildbereichs direkt anschließen. Vorteilhaft hierbei ist es, dass ein größerer Teil des ersten Bildes ausgewertet wird, so dass eine schnellere Anordnung der Hell-Dunkel-Grenze innerhalb des ersten Bildbereichs erfolgen kann. Besonders bevorzugt ist es, wenn in dem zweiten und/oder dritten Bildbereich eine vereinfachte Auswertung bezüglich der Hell-Dunkel-Grenze stattfindet, so dass der Aktuator sofort in die richtige Richtung bewegt werden kann. Hierdurch wird zusätzlich Rechenkapazität eingespart, wobei gleichzeitig die beschleunigte Bestimmung und Anwendung der Leuchtweitenausrichtung sichergestellt ist.

In einer weiteren Ausgestaltung sind die folgenden zusätzlichen Schritte vorgesehen: Bestimmen einer Reflektivität einer Fahrbahnoberfläche in Abhängigkeit des ersten, zweiten und/oder dritten Bildbereichs und Bestimmen der Leuchtweitenausrichtung in Abhängigkeit der Reflektivität.

In dieser Ausgestaltung wird zusätzlich die Reflektivität der Fahrbahnoberfläche bestimmt, wobei der zweite und/oder dritte Bildbereich zu Hilfe genommen wird. Dies kann insbesondere dann erfolgen, wenn die Hell-Dunkel-Grenze innerhalb des ersten Bildbereichs angeordnet ist und die jeweils zusätzlichen Bildbereiche entweder außerhalb des Leuchtbereichs und/oder innerhalb des Leuchtbereichs angeordnet sind. Dann kann ein Vergleich von dem Leuchtbereich zu dem außerhalb des Leuchtbereichs liegenden Bereichs durchgeführt werden, woraus Rückschlüsse auf die Reflektivität, also das Streuungs- und Reflexionsverhalten von Licht, gemacht werden können. Somit kann diese wesentliche physikalische Eigenschafte der Fahrbahnoberfläche ermittelt und bei der Leuchtweitenausrichtung berücksichtigt werden. Hieraus ergibt sich eine besonders schnelle und genaue Bestimmung der Leuchtweitenausrichtung.

In einer weiteren Ausgestaltung sind die folgenden zusätzlichen Schritte vorgesehen: Bestimmen einer Topologie einer Fahrbahnoberfläche, und Bestimmen der Leuchtweitenausrichtung in Abhängigkeit der Topologie der Fahrbahnoberfläche.

In dieser Ausgestaltung wird ein topologischer Verlauf der Fahrbahnoberfläche bei dem Bestimmen der Leuchtweitenausrichtung berücksichtigt. Wie bereits oben erwähnt, hat die Ausgestaltung der Fahrbahnoberfläche einen Einfluss darauf, wo sich die Hell-Dunkel-Grenze befindet. Durch Erfassen der Fahrbahnoberfläche kann ein Rückschluss darauf gemacht werden, wo sich die Hell-Dunkel-Grenze in diesem konkreten Fall befinden müsste. Aufgrund dieser Information lässt sich dann die Leuchtweitenausrichtung an die aktuellen Gegebenheiten anpassen. Das Erfassen der Topologie kann beispielsweise durch dreidimensionale Messung mit Ultraschall, Stereokamera oder Infrarot-Tiefenmesssensoren erfolgen. Ebenso können unebene Bereiche optisch, unter der Annahme eines gleichmäßigen fahrbaren Belags, erkannt und für das Bestimmen der Leuchtweitenausrichtung und/oder deren Fehljustage berücksichtigt werden. Hieraus ergibt sich eine noch genauere Bestimmung der Leuchtweitenausrichtung, deren Güte unabhängig von den konkreten Gegebenheiten ist. Der Leuchtbereich und/oder der Bereich außerhalb des Leuchtbereichs kann dazu genutzt werden, um Streuungen und Fehler beim Ermitteln der Leuchtweitenausrichtung und/oder Fehljustage zu verringern.

In einer weiteren Ausgestaltung sind die folgenden zusätzlichen Schritte vorgesehen: Erfassen von Bewegungen des Kraftfahrzeugs, und Bestimmen der Leuchtweitenausrichtung in Abhängigkeit der Bewegungen.

In dieser Ausgestaltung wird die Fahrzeugdynamik, d. h. Bewegungen des Fahrzeugs um die Längs-/Quer- und Hochachse des Fahrzeugs, beim Bestimmen der Leuchtweitenausrichtung berücksichtigt. In Abhängigkeit der entsprechenden Bewegungen, insbesondere eine Roll-/Nick- und Gierbewegung, kann die Lage des zumindest einen Scheinwerfers relativ zu der Fahrbahnoberfläche ermittelt werden. Hieraus ergibt sich eine entsprechende Anpassung der gewünschten Leuchtweitenausrichtung, die zum Bestimmen der tatsächlichen Leuchtweitenausrichtung verwendet wird. Diese Bewegungen können durch bereits im Fahrzeug vorhandene Sensoren erfasst werden, beispielsweise durch Beschleunigungssensoren, insbesondere 3D-Beschleunigungssensoren. Insgesamt ergibt sich hieraus eine Verbesserung der Genauigkeit des Bestimmens der Leuchtweitenausrichtung.

In einer weiteren Ausgestaltung sind die folgenden zusätzlichen Schritte vorgesehen: Bestimmen von charakteristischen Datenreihen des ersten, zweiten und/oder dritten Bildbereichs und Bestimmen der Leuchtweitenausrichtung in Abhängigkeit der charakteristischen Werte.

In dieser Ausgestaltung wird mindestens eine charakteristische Datenreihe einer der Bildbereiche ausgewertet. Dies führt zu charakteristischen Werten für eine Lichtverteilung innerhalb des Bildbereichs. Bevorzugt ist es, wenn der Bildbereich matrixartig aufgebaut ist, insbesondere eine Matrix von Pixeln aufweist. Die charakteristischen Werte beziehen sich jeweils auf Datenreihen dieser Matrix, also Zeilen oder Spalten. Diese charakteristischen Werte sind derart ausgebildet, dass sie eine Helligkeit über die jeweilige Datenreihe beschreiben oder einen Rückschluss auf die Helligkeit in der Datenreihe zulassen. Nach dem Bestimmen der charakteristischen Werte kann dann die Leuchtweitenausrichtung in Abhängigkeit der charakteristischen Werte auf einfache und recheneffiziente Weise erfolgen. Beispielsweise können charakteristische Werte derart ausgestaltet sein, dass Datenreihen, die unbeleuchtete Umgebungsbereiche wiedergeben, einen geringen charakteristischen Wert aufweisen. Umgekehrt ist dann bevorzugt eine Datenreihe, die den Leuchtbereich beschreibt, mit einem entsprechend hohen charakteristischen Wert zu versehen.

Dadurch kann dann bei starker Veränderung zwischen den Werten die Position der Hell-Dunkel-Grenze in zumindest einer Dimension bezogen auf den ersten, zweiten oder dritten Bildbereich bestimmt werden. Vorteil hierbei ist es, dass das Bestimmen von charakteristischen Werten von Datenreihen auf sehr einfache und robuste Art erfolgen kann, die sehr recheneffizient möglich ist. Somit wird insgesamt ein Verfahren bereitgestellt, das die Position der Hell-Dunkel-Grenze in zumindest einer Dimension sehr schnell und recheneffizient ermöglicht.

In einer weiteren Ausgestaltung werden als Datenreihen von mindestens einem der Bildbereiche Bildzeilen des jeweiligen Bildbereichs verwendet.

In dieser Ausgestaltung wird die Leuchtweitenausrichtung in vertikaler Richtung des Bildbereichs bestimmt. Hierzu werden die jeweiligen Bildzeilen - sofern diese im Wesentlichen horizontal zur Fahrbahnebene angeordnet sind - einzeln in charakteristische Werte umgewandelt und anschließend die daraus entstehende Spalte an charakteristischen Werten ausgewertet. Vorteil hierbei ist es, dass die Verwendung von Bildzeilen für eine Vielzahl von Fernlichtsystemen sinnvoll ist, da typischerweise unter der Leuchtweitenausrichtung ein Abstand von dem Kraftfahrzeug zu der Hell-Dunkel-Grenze in Fahrtrichtung verstanden wird. Dieser Abstand würde sich somit in etwa vertikal in dem ersten Bild darstellen.

In einer weiteren Ausgestaltung werden als charakteristische Werte für die Datenreihen Summen der Datenreihen des jeweiligen Bildbereichs verwendet.

In dieser Ausgestaltung werden die charakteristischen Werte durch Summierung aller nummerischen Werte für Pixel einer Datenreihe ermittelt. Hieraus ergibt sich in sehr einfacher Weise, dass besonders helle Bereiche sehr hohe charakteristische Werte bilden, wohingegen weniger beleuchtete Bereiche nur sehr niedrige charakteristische Werte erzeugen. Somit kann das Verfahren noch recheneffizienter gestaltet werden. Alternative Möglichkeiten zur Bildung von charakteristischen Werten sind beispielsweise gewichtete Summen, normierte Summen oder weitere qualitativ bewertende Werte.

Durch Vergleich der Summen kann die Zeile ermittelt werden, in der die Hell-Dunkel-Grenze, also der Übergang zwischen beleuchteten und unbeleuchteten Bereichen, vorliegt.

Alternativ ist es auch denkbar, dass Spaltensummen in entsprechender Weise zum Einsatz kommen, um zumindest teilweise vertikal Verlaufende Hell-Dunkel-Grenzen zu erkennen.

Zusätzlich oder alternativ zur Summenbildung können alternativ auch Rangwertfilter, z. B. Minimum oder Maximum, zum Ermitteln eines Helligkeiten- und/oder Gradienten-Maßes genutzt werden. Ferner kann auch eine Multiplikation der jeweiligen Werte in den Datenreihen mit einem entfernungsabhängigen Faktor für einen Ausgleich des Helligkeitsabfalls in der Entfernung genutzt werden.

In einer weiteren Ausgestaltung ist der folgende zusätzliche Schritt vorgesehen: Ausrichten des ersten Scheinwerfers in Abhängigkeit der Leuchtweitenausrichtung und einer Sollausrichtung.

In dieser Ausgestaltung wird die zuvor bestimmte Leuchtweitenausrichtung dazu verwendet, den Scheinwerfer selbst zu steuern. Hieraus ergibt sich insgesamt eine Kalibriermöglichkeit durch das Messen der Ist-Ausrichtung, also der aktuellen Leuchtweitenausrichtung, und ein anschließendes Anpassen der Ist-Ausrichtung an die gewünschte Sollausrichtung.

In einer weiteren Ausgestaltung ist der folgende zusätzliche Schritt vorgesehen: Bestimmen der Sollausrichtung in Abhängigkeit einer Leuchtweitenausrichtung eines zweiten Scheinwerfers.

In dieser Ausgestaltung wird der zumindest eine Scheinwerfer in Abhängigkeit eines zweiten Scheinwerfers ausgerichtet. Hierzu wird vorzugsweise zunächst die Leuchtweitenausrichtung des zweiten Scheinwerfers bestimmt. Diese entspricht dann der Sollausrichtung des zumindest einen Scheinwerfers. Anschließend kann dann der zumindest eine Scheinwerfer an der Sollausrichtung ausgerichtet werden, so dass sich insgesamt eine Parallelität und damit gleichartige Leuchtweitenausrichtung beider Scheinwerfer ergibt. Somit kann eine Fehljustierung bezüglich der Parallelität sicher und einfach ausgeglichen werden.

In einer weiteren Ausgestaltung ist der folgende zusätzliche Schritt vorgesehen: Ausrichten von dem mindestens ersten Scheinwerfer in eine vordefinierte Grundausrichtung.

In dieser Ausgestaltung wird der erste Scheinwerfer zum Bestimmen der Leuchtweitenausrichtung und vorzugsweise auch zum Ausrichten des Scheinwerfers in Abhängigkeit der Sollausrichtung zunächst in die vordefinierte Grundausrichtung gebracht. Die vordefinierte Grundausrichtung ist vorzugsweise nahe dem Kraftfahrzeug, so dass eine besonders gute Erfassung mittels des Sensors möglich ist. Ferner wird dadurch vermieden, dass andere Kraftfahrzeuge oder Verkehrsteilnehmer geblendet werden. Auch hier wird sowohl die Sicherheit als auch die Genauigkeit der Leuchtweitenausrichtung und der entsprechenden Justierung maßgeblich erhöht.

In einer weiteren Ausgestaltung wird als erster Leuchtbereich ein fahrerseitiger Leuchtbereich verwendet.

In dieser Ausgestaltung wird als erster Leuchtbereich vorzugsweise der fahrerseitige Leuchtbereich vorgesehen. Dies ist beim Rechtsverkehr der linke Leuchtbereich und bei einem Linksverkehr vorzugsweise der rechte Leuchtbereich. Die Hell-Dunkel-Grenzen dieser fahrerseitigen Leuchtbereiche sind jeweils typischerweise näher am Kraftfahrzeug angeordnet als auf der Beifahrerseite. Somit kann eine besonders genaue und sichere Erfassung der Leuchtweitenausrichtung und/oder Anpassung der Leuchtweitenausrichtung in Abhängigkeit einer Sollausrichtung erfolgen und gleichzeitig wirksam eine Blendung von weiteren Verkehrsteilnehmern verhindert werden.

Ausführungsbeispiele der Erfindung sind in der Zeichnung dargestellt und werden in der nachfolgenden Beschreibung näher erläutert. Es zeigen
- Figur 1: ein Kraftfahrzeug mit einem Scheinwerfer und einem optischen Sensor,
- Figur 2: einen ersten Leuchtbereich,
- Figur 3: einen zweiten Leuchtbereich,
- Figur 4: zwei Leuchtbereiche mit einer horizontalen und vertikalen Hell-Dunkel-Grenze,
- Figur 5: einen Leuchtbereich von zwei Scheinwerfern, wobei die zwei Scheinwerfer fehlerhaft in horizontaler Richtung zueinander ausgerichtet sind,
- Figur 6: die Leuchtbereiche aus Figur 5, wobei zusätzlich die beiden Leuchtbereiche in vertikaler Richtung fehlerhaft zueinander ausgerichtet sind,
- Figur 7: eine erste Auswertung von zwei vertikal fehlerhaft zueinander ausgerichteten Leuchtbereichen,
- Figur 8: eine zweite Auswertung von zwei vertikal fehlerhaft zueinander ausgerichteten Leuchtbereichen,
- Figur 9: eine dritte Auswertung von korrekt zueinander ausgerichteten Leuchtbereichen,
- Figur 10: eine vierte Auswertung von zwei vertikal fehlerhaft zueinander ausgerichteten Leuchtbereichen,
- Figur 11: der Einsatz von drei Bildbereichen zum Auffinden der Hell-Dunkel-Grenze,
- Figur 12: einen Gradientenverlauf bei dem Vorgehen gemäß Figur 11, und
- Figur 13: ein Flussdiagramm eines bevorzugten Ausführungsbeispiels des Verfahrens.

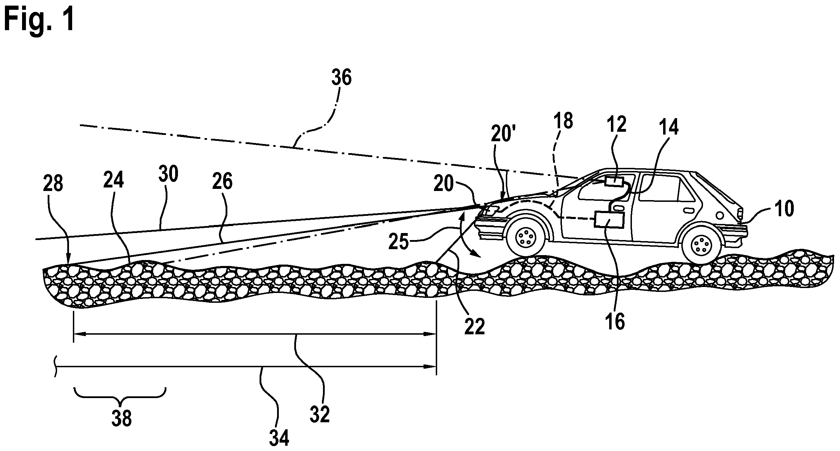

Figur 1 zeigt ein Kraftfahrzeug 10 mit einer Kamera 12. Die Kamera 12 ist als Matrixkamera ausgebildet. Sie ist ferner über eine Datenleitung 14 mit einer Steuer- und Auswerteeinheit 16 verbunden. Die Steuer- und Auswerteeinheit 16 ist weiter über eine Datenleitung 18 mit einem ersten Scheinwerfer 20 des Kraftfahrzeugs 10 steuertechnisch verbunden.

Das hier dargestellte Beispiel bezieht sich auf ein Kraftfahrzeug, das für den Rechtsverkehr ausgebildet ist. Der Scheinwerfer 20 emittiert einen Lichtkegel 22, der auf einer Fahrbahnoberfläche 24 reflektiert wird. Der Lichtkegel 22 kann als Ganzes über einen Aktuator des Scheinwerfers 20 in Richtung der Pfeile 25 verschwenkt werden. Der Leuchtkegel 22 weist fahrerseitig eine erste Obergrenze 26 auf, die auf der Fahrbahnoberfläche 24 eine Hell-Dunkel-Grenze 28 definiert. Weiter weist der Leuchtkegel 22 eine zweite, beifahrerseitige Obergrenze 30 auf. Die Obergrenzen 26 und 30 sind dabei in Fahrtrichtung betrachtet nebeneinander angeordnet. Auch die beifahrerseitige Obergrenze 30 bildet zusammen mit der Fahrbahnoberfläche 24 eine Hell-Dunkel-Grenze, wobei dies aus Gründen der Übersichtlichkeit hier nicht dargestellt ist. Hieraus ergibt sich ein fahrerseitiger Leuchtbereich 32 und ein beifahrerseitig erzeugter Leuchtbereich 34.

Die Kamera 12 ist in Fahrtrichtung des Kraftfahrzeugs 10 ausgerichtet und nimmt einen Umweltbereich vor dem Kraftfahrzeug 10 auf, der sich innerhalb eines Aufnahmebereichs 36 der Kamera 12 befindet.

Wie in Figur 1 erkennbar ist, ergibt sich bei Aufnahme eines Bildes im Bereich der Fahrbahn 24 ein Teil 38 der Leuchtbereiche 32 und 34, der von der Kamera 12 erfasst wird.

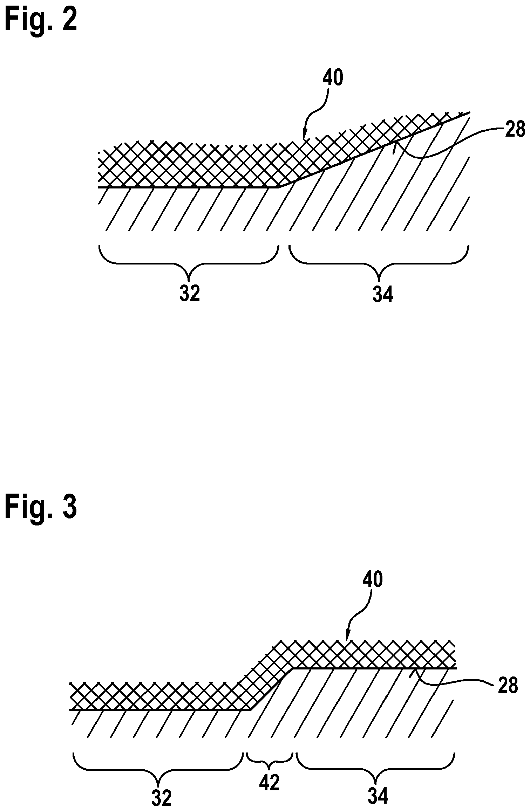

Figur 2 zeigt eine typische Szene, wie sie von der Kamera 12 erfasst wird. Hierbei ist der beifahrerseitige Leuchtbereich 34 unterhalb der Hell-Dunkel-Grenze 28 angeordnet. Neben dem fahrerseitigen Leuchtbereich 32 ist der beifahrerseitige Leuchtbereich 34 ebenfalls unterhalb der Hell-Dunkel-Grenze 28 zu erkennen. Die beiden Leuchtbereiche 32 und 34 unterscheiden sich hierbei dadurch, dass der beifahrerseitige Leuchtbereich 34 in dieser Projektion höher erscheint und somit eine höhere Leuchtweite in diesem Bereich aufweist. Zudem ist in Figur 2 zu erkennen, dass die Hell-Dunkel-Grenze 28 den außerhalb des Leuchtbereichs liegenden Bereich 40 von den Leuchtbereichen 32 und 34 trennt. Eine derartige Szene kann beispielsweise bei einem Abblendlicht vorliegen.

Figur 3 zeigt ein weiteres Beispiel für eine Szene, wie sie von der Kamera 12 aufgenommen wird. Hierbei handelt es sich um eine alternative Ausgestaltung der Leuchtbereiche, beispielsweise durch einen Scheinwerfer 20 anderer Art. Im Unterschied zu Figur 2 ist zwischen den Leuchtbereichen 32 und 34 ein Zwischenbereich 42 zu erkennen, der einen Übergang zwischen den Leuchtbereichen 32 und 34 schafft, so dass die Hell-Dunkel-Grenze 28 sowohl des fahrerseitigen als auch des beifahrerseitigen Leuchtbereichs 32 und 34 als horizontale Linie erscheinen.

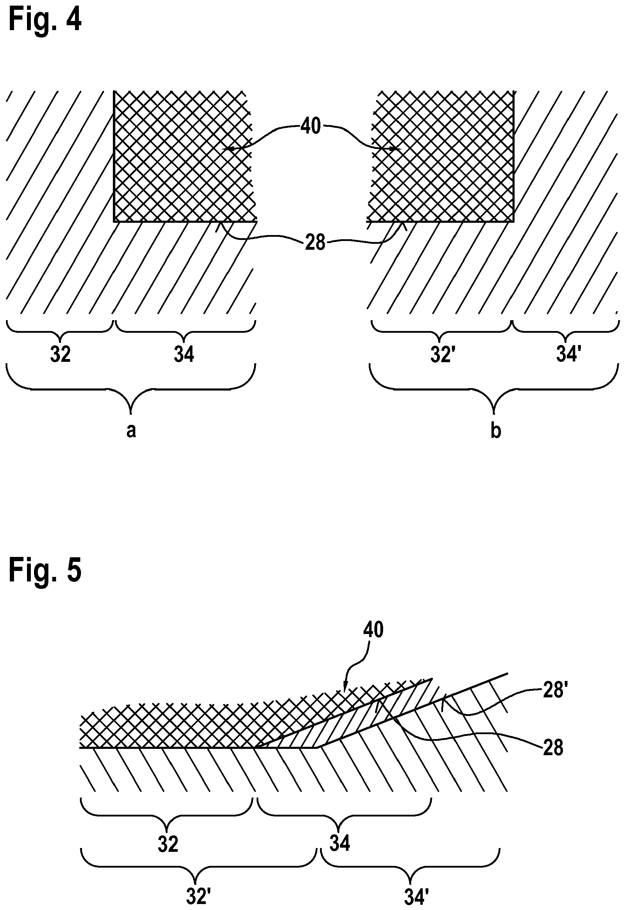

Figur 4 zeigt eine weitere Szene, wie sie von der Kamera 12 aufgenommen werden kann, wenn eine weitere Art von Scheinwerfern 20 verwendet wird. Hierbei handelt es sich in einem Abschnitt a um einen linken Scheinwerfer 20 und in einem Abschnitt b um einen rechten Scheinwerfer. Beide Scheinwerfer zusammen erzeugen ein sogenanntes blendfreies Fernlicht, beispielsweise durch einen Matrixbeam. Als Besonderheit ist hier zu erkennen, dass im Abschnitt a der fahrerseitige Leuchtbereich 32 ohne horizontale Hell-Dunkel-Grenze 28, also in unbestimmte Ferne ausgebildet ist. Demgegenüber steht der beifahrerseitige Leuchtbereich 34' im Abschnitt b, der dem beifahrerseitigen Scheinwerfer zugeordnet ist.

Der beifahrerseitige Leuchtbereich 34 in Abschnitt a weist wiederum eine horizontal angeordnete Hell-Dunkel-Grenze 28 auf, die durch einen vertikalen Verlauf der Hell-Dunkel-Grenze 28 begrenzt wird. In entsprechender Weise in Abschnitt b ist der fahrerseitige Leuchtbereich 32' ausgebildet. Somit ist der außerhalb der Leuchtbereiche 32, 34, 32' und 34' befindliche Bereich 40 als Ausschnitt ausgebildet, der beispielsweise vorausfahrende Kraftfahrzeuge aussparen kann, um so eine Blendung zu vermeiden. Bei derartigen Scheinwerfern 20 ist es von Vorteil, wenn sowohl eine horizontale als auch eine vertikale Ausrichtung der Scheinwerfer bestimmt und vorzugsweise kalibriert werden kann.

Figur 5 zeigt eine erste Fehljustierung zweier Scheinwerfer relativ zueinander. Diese Fehljustierung basiert darauf, dass die beiden Scheinwerfer zwar parallel zueinander ausgerichtet sind, jedoch die horizontale Ausrichtung inkorrekt ist.

Figur 5 ist zu entnehmen, dass sich bei dieser Art der Fehljustierung die Hell-Dunkel-Grenze 28 des fahrerseitigen Scheinwerfers20 und die Hell-Dunkel-Grenze 28' des beifahrerseitigen Scheinwerfers zumindest teilweise überlagern. Entsprechend sind die fahrerseitigen Leuchtbereiche 32 des Scheinwerfers 20 und 32' des beifahrerseitigen Scheinwerfers horizontal zueinander verschoben.

Dies gilt entsprechend für die beifahrerseitigen Leuchtbereiche 34 und 34'. Ein derartiger Zustand der Leuchtbereiche 32, 34, 32' und 34' muss dann in horizontaler Richtung korrigiert werden.

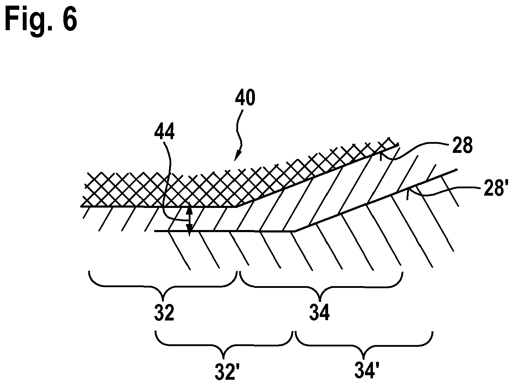

Figur 6 zeigt eine zweite Fehljustierung zweier Scheinwerfer relativ zueinander. Diese Fehljustierung basiert darauf, dass die beiden Scheinwerfer nicht parallel zueinander ausgerichtet sind und die horizontale Ausrichtung inkorrekt ist. Hierbei ist eine Korrektur notwendig wie sie mit Bezug zur Fig. 5 bereits beschrieben wurden. Zusätzlich müssen die Scheinwerfer noch in vertikaler Richtung 44 zueinander ausgerichtet werden, um eine parallele Ausrichtung zu erreichen.

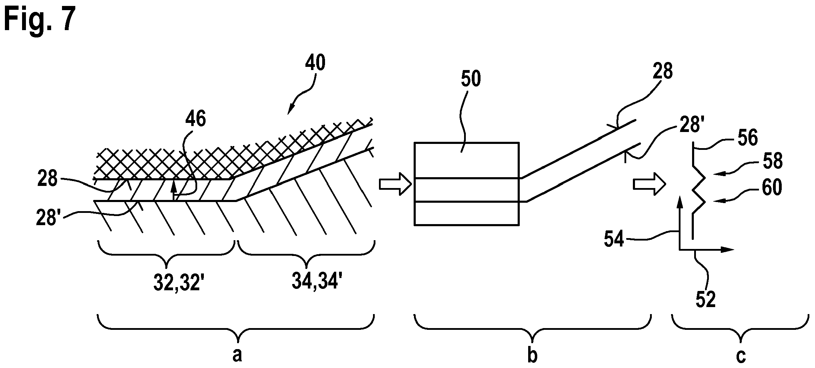

Figur 7 zeigt eine weitere Fehljustierung, wobei die Scheinwerfer nicht parallel zueinander angeordnet sind. Dies ist anhand der vertikalen Verschiebung der Hell-Dunkel-Grenzen 28 und 28' zueinander zu erkennen. In diesem Fall muss der beifahrerseitige Scheinwerfer und somit dessen Hell-Dunkel-Grenze 28' in Richtung des Pfeils 46 zu der Hell-Dunkel-Grenze 28 hin verlagert werden.

Abschnitt b zeigt den Verlauf der beiden Hell-Dunkel-Grenzen 28 und 28', wobei diese teilweise innerhalb eines ersten Bildbereichs 50 erfasst werden. Der Bildbereich 50 ist matrixartig aufgebaut und weist Datenreihen in horizontaler und vertikaler Richtung auf, also Pixelzeilen und Pixelspalten. Zur Detektion der Position der jeweiligen Abschnitte der Hell-Dunkel-Grenzen 28 und 28' in vertikaler Richtung werden nunmehr charakteristische Werte entlang der jeweiligen Pixelreihen ermittelt. Dies erfolgt hier zunächst in Abhängigkeit eines Gradientenbildes, wobei dann besonders hohe Werte im Bereich der Hell-Dunkel-Werte 28 und 28' vorhanden sind und in den anderen Bereichen keine oder nur geringe Werte vorhanden sind. Durch Bilden der charakteristischen Werte, vorzugsweise durch zeilenweise Summenbildung, ergibt sich eine sehr einfach auszuwertende und schematische Repräsentation, wie sie in Abschnitt c gezeigt ist. Hier ist zum besseren Verständnis ein Koordinatensystem mit einer Abszisse 52 und einer Ordinate 54 dargestellt. Die Abszisse 52 weist den quantitativen Wert des charakteristischen Werts auf. Die Ordinate 54 weist die charakteristischen Werte den einzelnen Zeilen zu. Innerhalb des Koordinatensystems ist eine charakteristische Reihe 56, bestehend aus den charakteristischen Werten dargestellt. Innerhalb der charakteristischen Datenreihe 56 sind zwei Maxima 58 und 60 erkennbar. Diese entsprechen jeweils den vertikalen Orten der Hell-Dunkel-Grenzen 28 und 28'. Somit kann durch Auswerten der charakteristischen Datenreihe sehr einfach und schnell die relative Lage beider Scheinwerfer zueinander ermittelt werden.

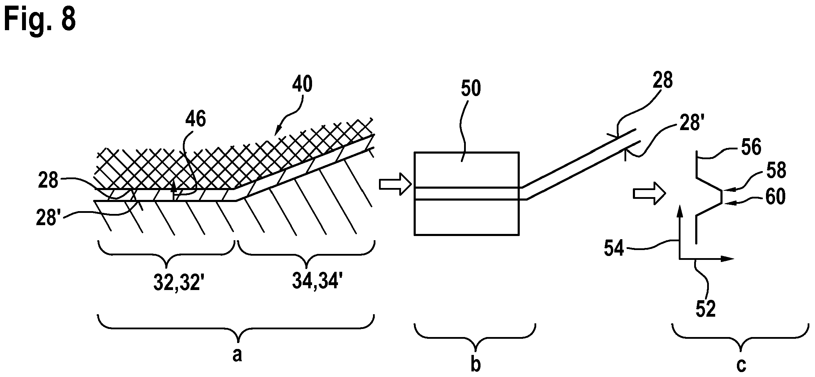

Zur Verdeutlichung dieses Verfahrens werden in den Figuren 8 bis 10 unterschiedliche Leuchtweitenausrichtungen der Scheinwerfer zueinander dargestellt und deren Auswirkungen auf die charakteristische Reihe 56 beschrieben.

In Figur 8 ist eine ähnliche Situation wie in Figur 7 dargestellt, wobei die Hell-Dunkel-Grenze 28' bereits in Richtung der Hell-Dunkel-Grenze 28 teilweise verlagert wurde. In der charakteristischen Reihe 56 ist dabei zu erkennen, dass die Maxima 58 und 60 zueinander hin versetzt wurden, so dass sich zwischen den beiden Maxima 58 und 60 ein gleichförmiger Verlauf bildet. Dies ist ein Hinweis dafür, dass sich die Hell-Dunkel-Grenzen 28 und 28' sehr nah beieinander befinden.

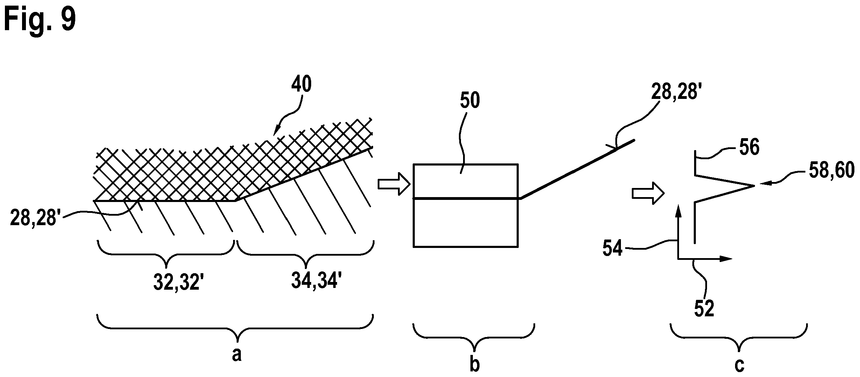

Figur 9 zeigt den fehlerfreien Fall, wobei die Hell-Dunkel-Grenzen 28 und 28' aufeinander fallen. Hieraus ergibt sich ein besonders hohes Maximum in der charakteristischen Datenreihe, da die Maxima 58 und 60 kumulativ aufeinander fallen.

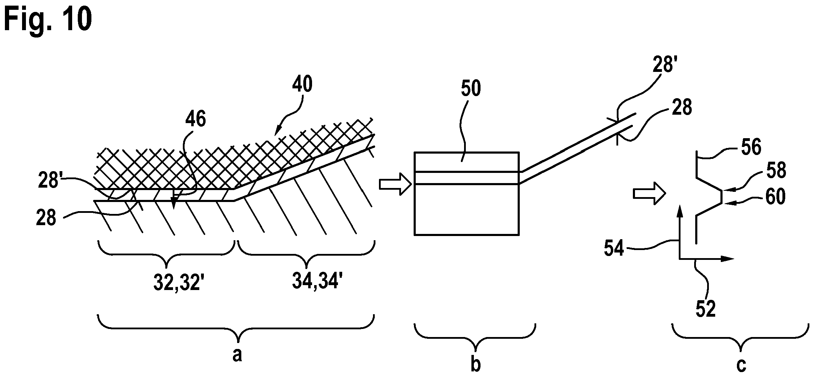

Figur 10 zeigt eine ähnliche Situation wie in Figur 8, wobei jedoch die Hell-Dunkel-Grenze 28' oberhalb von der Hell-Dunkel-Grenze 28 angeordnet ist, so dass die Hell-Dunkel-Grenze 28' in vertikaler Richtung nach unten zu der Hell-Dunkel-Grenze 28 versetzt werden muss.

Die Darstellungen der Figuren 7 bis 10 können als Momentaufnahmen betrachtet werden, die bei Durchführung einer Ausbildung des erfindungsgemäßen Verfahrens entstehen könnten. In diesem Fall würden die Figuren z bis 10 gemäß ihrer Nummerierung in aufsteigender Richtung eine zeitliche Abfolge bilden. Dieses Verfahren kann als eine Art lokale Maximum-Suche betrachtet werden.

Zum ersten Zeitpunkt in Fig. 7 liegen die Hell-Dunkel-Grenzen 28 und 28' weit auseinander und werden dann in ihrer Position in Richtung 46 verändert.

Zum zweiten Zeitpunkt in Fig. 8 liegen die Hell-Dunkel-Grenzen 28 und 28' bereits näher beieinander. Sie sind jedoch immernoch nicht korrekt ausgerichtet. Die Maxima 58 und 60 der charakteristischen Reihe 56 in Fig. 8 sind bereits betragsmäßig größer als die Maxima 58 und 60 aus Fig. 7. Dies deutet auf eine Verbesserung der Ausrichtungen der Scheinwerfer von der Situation in Fig. 7 zu der Situation in Fig. 8 hin. Die Scheinwerferposition wird anschließend weiter in die Richtung 46 verändert.

Zum dritten Zeitpunkt in Fig. 9 liegen die Hell-Dunkel-Grenzen 28 und 28' ideal übereinander. Die Maxima 58 und 60 liegen aufeinander, werden dadurch kummuliert und sind damit betragsmäßig maximal groß. Zu diesem Zeitpunkt ist jedoch nicht gesichert, ob die Maxima 58 und 60 ihren höchst möglichen Betrag erreicht haben, der durch Verlagerung der Hell-Dunkel-Grenzen 28 und 28' erreicht werden kann. Daher werden die Hell-Dunkel-Grenzen 28 und 28' weiter in die bisherige Richtung 46 verlagert.

Zum vierten Zeitpunkt in Fig. 10 liegen die Hell-Dunkel-Grenzen 28 und 28' nicht mehr ideal übereinander. Die Maxima 58 und 60 sind betragsmäßig kleiner als die Maxima 58 und 60 aus Fig. 9. Hieraus kann gefolgt werden, dass die Position der Hell-Dunkel-Grenzen 28 und 28'in Fig. 9, die optimale Position ist. Abschließend können die Scheinwerfer derart angesteuert werden, dass sie diese optimale Position einnehmen.

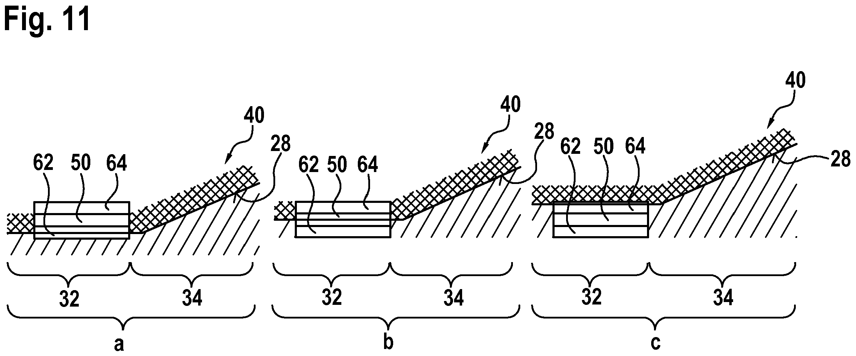

Figur 11 zeigt ein weiteres Ausführungsbeispiel des erfindungsgemäßen Verfahrens. Hierbei werden zusätzlich zu dem im Bildbereich 50, das in entsprechender Weise verwendet wird, wie mit Bezug zu den Figuren 7 bis 10 beschrieben, ein zweiter Bildbereich 62 und ein dritter Bildbereich 64 verwendet. Der zweite Bildbereich 62 ist in vertikaler Richtung betrachtet unterhalb des ersten Bildbereichs 50 angeordnet. Der dritte Bildbereich 64 ist in vertikaler Richtung oberhalb des ersten Bildbereichs 50 angeordnet. Durch Verwendung dieser drei voneinander unterschiedlichen Bildbereiche 50, 62 und 64 wird es ermöglicht, das Verfahren sehr effizient zu gestalten. Innerhalb der Bildbereiche 62 und 64 muss keine sehr aufwändige und genaue Auswertung der Position der Hell-Dunkel-Grenze 28 erfolgen. Es ist ausreichend, wenn erkannt wird, dass die Hell-Dunkel-Grenze 28, wie dargestellt, innerhalb des zweiten Bildbereichs 62 angeordnet ist. Der Bildbereich 50 bildet dabei einen Soll-Bereich, in dem sich die Hell-Dunkel-Grenze 28 befinden muss, um eine korrekte Ausrichtung der Leuchtweitenausrichtung zu gewährleisten. Durch eine einfache Erkennung, dass sich die Hell-Dunkel-Grenze 28 innerhalb des Bildbereichs 62 befindet, kann die Hell-Dunkel-Grenze 28 schnell in den ersten Bildbereich 50 verlagert werden, wo dann eine sehr genaue Ausrichtung der Leuchtweite erfolgen kann.

In Abschnitt b ist eine Szene dargestellt, aus der deutlich wird, dass sich die Hell-Dunkel-Grenze 28 innerhalb des ersten Bildbereichs 50 befindet. Somit kann dann das Verfahren sofort auf hochgenaue Weise durchgeführt werden.

In Abschnitt c ist der zu Abschnitt a komplementäre Fall dargestellt. Hier befindet sich die Hell-Dunkel-Grenze 28 innerhalb des dritten Bildbereichs 64. Somit muss die Hell-Dunkel-Grenze 28 in vertikaler Richtung nach unten zu dem Bildbereich 50 bewegt werden.

Wie weiter aus Abschnitt b deutlich wird, befindet sich der Leuchtbereich bei korrekter Anordnung der Hell-Dunkel-Grenze 28 innerhalb des Bildbereichs 62. Gleichzeitig befindet sich der unbeleuchtete Bereich 40 im dritten Bildbereich 64. Durch Auswertung des zweiten und dritten Bildbereichs 62 und 64 können somit Rückschlüsse auf die Reflektivität der angeleuchteten Fahrbahnoberfläche gezogen werden. Aufgrund dieser Reflektivität ist es möglich, die Auswertung innerhalb des Bildbereichs 50 anzupassen und zu verbessern. Hieraus kann geschlossen werden, wie hoch der Gradient sein müsste. Beispielsweise ergibt sich bei einer hohen Reflektivität und niedrigen Streurate ein sehr starker Gradient, wohingegen bei niedriger Reflektivität und hoher Streuung ein unscharfer, "verwischter" Übergang zu detektieren ist.

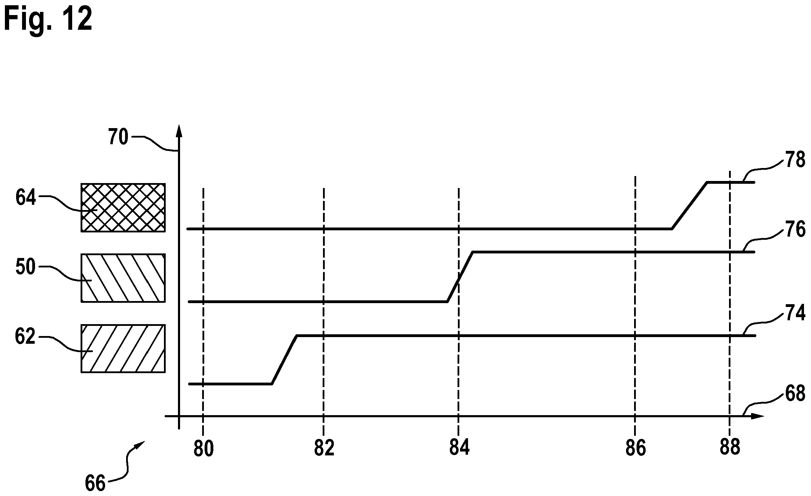

Figur 12 beschreibt eine Möglichkeit zur qualitativen Bestimmung des Leuchtwinkels in Abhängigkeit des ersten, zweiten und dritten Bildbereichs 50, 62 und 64. Hierzu ist ein Koordinatensystem 66 dargestellt, welches eine Abszisse 68 sowie eine Ordinate 70 aufweist. Die Abszisse 68 entspricht einem Leuchtwinkel des Scheinwerfers 20, also einer Ausrichtung des Lichtkegels 22 in Richtung der Pfeile 25. Die Ordinate 70 beschreibt qualitativ einen Mittelwert innerhalb der Bildbereiche 50, 62 und 64. Ein Verlauf des Mittelwerts für den Bildbereich 62 wird mittels der Kurve 74 dargestellt. Ein Verlauf des Mittelwerts für den Bereich 50 wird mittels der Kurve 76 dargestellt. Ein Verlauf des Mittelwerts für den dritten Bildbereich 64 wird mittels einer Kurve 78 dargestellt. Hierbei ist zu beachten, dass diese Kurven 74, 76 und 78 jeweils einen unteren und einen oberen Wert aufweisen, wobei die unteren Werte der Kurven 74, 76 und 78 zueinander identisch sind. Diese entsprechen dem Leuchtwert innerhalb des unbeleuchteten Bereichs 40. Zudem entspricht der obere Wert der Kurven 74, 76 und 78 ebenfalls dem gleichen Helligkeitswert, wobei dies einem Mittelwert entspricht, der bei einem Bildbereich vorliegt, der vollständig den Leuchtbereich 32 erfasst.

Innerhalb des Koordinatensystems 66 sind die Werte für fünf exemplarische Leuchtwinkel an den Stellen 80, 82, 84, 86 und 88 hervorgehoben.

An der Stelle 80 ist zu erkennen, dass sich der Mittelwert innerhalb aller drei Bildbereiche 50, 62 und 64 auf dem unteren Wert befindet. Somit ist davon auszugehen, dass die Hell-Dunkel-Grenze 28 in vertikaler Richtung unterhalb und außerhalb aller drei Bildbereiche 50, 62 und 64 angeordnet ist. Dies ist darauf zurückzuführen, dass alle drei Bildbereiche 50, 62 und 64 somit den unbeleuchteten Bereich 40 abbilden.

An der Stelle 82 ist lediglich der zweite Bildbereich 62 voll ausgeleuchtet. Somit liegt die Hell-Dunkel-Grenze 28 genau zwischen dem ersten Bildbereich 50 und zweiten Bildbereich 62.

An der Stelle 84 ist der zweite Bildbereich 62 voll ausgeleuchtet, der erste Bildbereich 50 teilweise ausgeleuchtet und der dritte Bildbereich 64 nicht ausgeleuchtet. Dies ergibt sich beispielsweise in der optimalen Position, wie sie in Figur 11, Abschnitt b dargestellt ist.

An Stelle 86 ist sowohl der erste als auch der zweite Bildbereich 50, 62 voll ausgeleuchtet und der dritte Bildbereich 64 nicht ausgeleuchtet. Somit befindet sich die Hell-Dunkel-Grenze zwischen dem ersten Bildbereich 50 und dem zweiten Bildbereich 64.

An Stelle 88 sind alle Bildbereiche 50, 62 und 64 voll ausgeleuchtet. Somit befindet sich die Hell-Dunkel-Grenze 28 oberhalb und außerhalb aller Bildbereiche 50, 62 und 64.

Durch das qualitative Auswerten der einzelnen Bildbereiche 50, 62 und 64 kann eine qualitative Leuchtweitenausrichtung und/oder eine qualitative Bestimmung der Leuchtweitenausrichtung sehr schnell und effizient erfolgen.

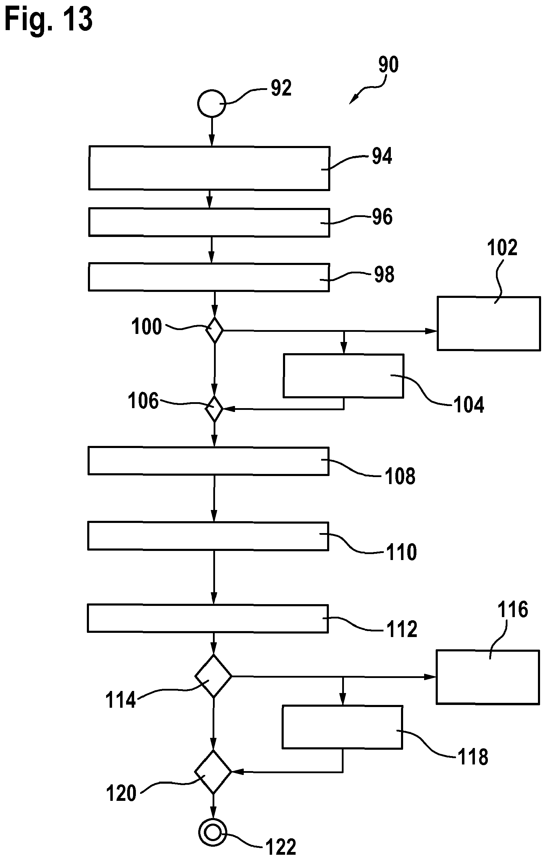

Figur 13 zeigt ein Flussdiagramm 90 eines bevorzugten Ausführungsbeispiels des erfindungsgemäßen Verfahrens.

In einem Startpunkt 92 beginnt das Verfahren.

In einem folgenden Schritt 94 wird der Scheinwerfer 20 in eine vordefinierte Grundposition gefahren.

In einem Schritt 96 wird vorzugsweise eine vordefinierte Lichtverteilung des Scheinwerfers 20 eingestellt, die eine besonders gute Hell-Dunkel-Grenze 28 erzeugt, so dass das Bestimmen der Leuchtweitenausrichtung sehr genau ermöglicht wird.

Anschließen erfolgt in Schritt 98 eine Prüfung auf Parallelität des ersten Scheinwerfers 20 relativ zu dem zweiten Scheinwerfer.

In einem weiteren Schritt 100 wird das Ergebnis aus Schritt 98 überprüft und der folgende Schritt ausgewählt.

Ist dies nicht der Fall, wird in einem zusätzlichen Schritt 102 ein Hinweis an einen Fahrer des Kraftfahrzeugs ausgegeben. Zudem wird in einem weiteren Schritt 104 eine Scheinwerferkorrektur durchgeführt, wie sie beispielsweise mit Bezug zu den Figuren 6 bis 10 beschrieben ist. Anschließend wird das Verfahren in Schritt 106 fortgeführt.

Wird in Schritt 100 festgestellt, dass die Scheinwerfer bereits parallel zueinander sind, wird das Verfahren sofort in Schritt 106 fortgeführt.

In einem weiteren Schritt 108 werden beide Scheinwerfer in eine zweite Grundposition gefahren und eine zweite Lichtverteilung für Messzwecke eingestellt. Die zweite Grundposition und die zweite Lichtverteilung dienen der Einstellung einer horizontalen Ausrichtung beider Scheinwerfer zueinander.

In einem weiteren Schritt 110 wird erneut ein Bild aufgenommen und es werden Bildbereiche zur Auswertung ausgewählt. Diese Bildbereiche können analog zu den Bildbereichen 50, 62 und 64 ausgewählt werden, wobei diese in horizontaler Richtung nebeneinander angeordnet sind.

In einem weiteren Schritt 112 wird die absolute Ausrichtung der Scheinwerfer geprüft. Auch dies erfolgt analog zu den bereits beschriebenen Vorgehensweisen und mit Bezug zu vordefinierten Soll-Werten.

In einem weiteren Schritt 114 wird entschieden, ob die Ausrichtung der Scheinwerfer insgesamt korrekt ist. Ist dies nicht der Fall, erfolgt ein entsprechender Hinweis an den Fahrer in einem weiteren Schritt 116 und zusätzlich die erneute Korrektur der Ausrichtung der Scheinwerfer in einem Schritt 118. Anschließend wird das Verfahren in einem weiteren Schritt 120 fortgeführt.

Wird in Schritt 114 festgestellt, dass die Ausrichtung korrekt ist, wird sofort in Schritt 120 fortgefahren.

Das Verfahren endet in einem Schlussschritt 122.

Die beschriebenen und in den Figuren gezeigten Ausführungsbeispiele sind nur beispielhaft gewählt. Unterschiedliche Ausführungsbeispiele können vollständig oder im Bezug auf die einzelnen Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten und einem zweiten Merkmal, so ist dies so zu lesen, dass das Ausführungsbeispiel gemäß einer Ausführungsform sowohl das erste Merkmal als auch das zweite Merkmal und gemäß einer zweiten Ausführungsform entweder nur das erste Merkmal oder nur das zweite Merkmal aufweist.

## Patentansprüche

1. Verfahren zum Bestimmen einer Leuchtweitenausrichtung von mindestens einem ersten Scheinwerfer (20) eines Kraftfahrzeugs (10), wobei das Kraftfahrzeug (10) mindestens einen optischen Sensor (12) aufweist, der dazu ausgebildet ist mindestens einen Teil (38) eines ersten Leuchtbereichs (32) des ersten Scheinwerfers (20) zu erfassen und ein erstes Bild mit dem Teil (38) des ersten Leuchtbereichs (32) zu erzeugen, mit den Schritten:
Einlesen des ersten Bildes des optischen Sensors (12),
Auswählen von mindestens einem ersten Bildbereich (50) in dem ersten Bild, wobei in dem ersten Bildbereich (50) eine Hell-Dunkel-Grenze (28) des ersten Scheinwerfers (20) abgebildet wird, und
Bestimmen der Leuchtweitenausrichtung des ersten Scheinwerfers (20) in Abhängigkeit des ersten Bildbereichs (50),
**dadurch gekennzeichnet, dass** das Verfahren ferner die folgenden Schritte umfasst:
Bestimmen einer Sollausrichtung in Abhängigkeit einer Leuchtweitenausrichtung eines zweiten Scheinwerfers (20'), und
Ausrichten des ersten Scheinwerfers (20) in Abhängigkeit der Leuchtweitenausrichtung des ersten Scheinwerfers (20) und der Sollausrichtung.

2. Verfahren nach Anspruch 1, mit den zusätzlichen Schritten:
Auswählen von mindestens einem zweiten Bildbereich (62) in dem ersten Bild, in dem ein Teil (38) des ersten Leuchtbereichs (32) abgebildet wird, und
Bestimmen der Leuchtweitenausrichtung ferner in Abhängigkeit des zweiten Bildbereichs (64).

3. Verfahren nach Anspruch 1 oder 2, mit den zusätzlichen Schritten:
Auswählen von mindestens einem dritten Bildbereich (64) in dem ein Bereich (40) außerhalb des Leuchtbereichs (32) abgebildet wird, und
Bestimmen der Leuchtweitenausrichtung ferner in Abhängigkeit des dritten Bildbereichs (64).

4. Verfahren nach Anspruch 1 und 2, mit den zusätzlichen Schritten:
Bestimmen einer Reflektivität einer Fahrbahnoberfläche (24) in Abhängigkeit des ersten, zweiten und dritten Bildbereichs (50, 62,64), und
Bestimmen der Leuchtweitenausrichtung in Abhängigkeit der Reflektivität.

5. Verfahren nach einem der vorangegangenen Ansprüche, mit den zusätzlichen Schritten:
Bestimmen einer Topologie einer Fahrbahnoberfläche (24), und
Bestimmen der Leuchtweitenausrichtung in Abhängigkeit der Topologie der Fahrbahnoberfläche (24).

6. Verfahren nach einem der vorangegangenen Ansprüche, mit den zusätzlichen Schritten:
Erfassen von Bewegungen des Kraftfahrzeugs (10), und
Bestimmen der Leuchtweitenausrichtung in Abhängigkeit der Bewegungen.

7. Verfahren nach einem der vorangegangenen Ansprüche, mit den zusätzlichen Schritten:
Bestimmen von charakteristischen Werten (56) für Datenreihen von mindestens einem der Bildbereiche (50, 62, 64), wobei als Datenreihen Bildzeilen des jeweiligen Bildbereichs (50, 62, 64) verwendet werden, und als charakteristische Werte für Datenreihen Summen der Datenreihen des jeweiligen Bildbereichs verwendet werden, und
Bestimmen der Leuchtweitenausrichtung in Abhängigkeit der charakteristischen Werte.

8. Verfahren nach einem der vorangegangenen Ansprüche, mit dem zusätzlichen Schritt:
Ausrichten von dem mindestens ersten Scheinwerfer (20) in eine vordefinierte Grundausrichtung.

9. Verfahren nach einem der vorangegangenen Ansprüche, **dadurch gekennzeichnet, dass** als erster Leuchtbereich (32) ein fahrerseitiger Leuchtbereich (32) verwendet wird.

10. Steuer- und Auswerteeinheit (16) zum Bestimmen einer Leuchtweitenausrichtung von mindestens einem ersten Scheinwerfer (20) eines Kraftfahrzeugs (10), wobei das Kraftfahrzeug (10) mindestens einen optischen Sensor (12) aufweist, der dazu ausgebildet ist mindestens einen Teil (38) eines ersten Leuchtbereichs (32) des ersten Scheinwerfers (20) zu erfassen und ein erstes Bild mit dem Teil (38) des ersten Leuchtbereichs (32) zu erzeugen, wobei die Steuer- und Auswerteeinheit (16) dazu ausgebildet ist, das erste Bild des optischen Sensors (12) einzulesen, mindestens einen ersten Bildbereich (50) in dem ersten Bild zu bestimmen, in dem eine Hell-Dunkel-Grenze (28) des ersten Scheinwerfers (20) abgebildet wird, und die Leuchtweitenausrichtung des ersten Scheinwerfers (20) in Abhängigkeit des ersten Bildbereichs (50) zu bestimmen, **dadurch gekennzeichnet, dass** die Steuer- und Auswerteeinheit (16) dazu ausgebildet ist, eine Sollausrichtung in Abhängigkeit einer Leuchtweitenausrichtung eines zweiten Scheinwerfers (20') zu bestimmen, und den ersten Scheinwerfer (20) in Abhängigkeit der Leuchtweitenausrichtung des ersten Scheinwerfers (20) und der Sollausrichtung auszurichten.

11. Computer-Programmprodukt mit Programmcode zur Durchführung des Verfahrens nach einem der vorangegangenen Ansprüche, wenn das Programmprodukt auf einer Vorrichtung ausgeführt wird.

## Claims

1. Method for determining a beam width alignment of at least one first headlight (20) of a motor vehicle (10), wherein the motor vehicle (10) has at least one optical sensor (12) which is configured to capture at least a portion (38) of a first beam region (32) of the first headlight (20) and to generate a first image with the portion (38) of the first beam region (32), having the steps of:
reading the first image of the optical sensor (12), selecting at least one first image region (50) in the first image, wherein a light/dark boundary (28) of the first headlight (20) is imaged in the first image region (50), and
determining the beam width alignment of the first headlight (20) in dependence on the first image region (50),
**characterized in that** the method furthermore comprises the following steps:
determining a desired alignment in dependence on a beam width alignment of a second headlight (20'), and
aligning the first headlight (20) in dependence on the beam width alignment of the first headlight (20) and the desired alignment.

2. Method according to Claim 1, having the additional steps of:
selecting at least one second image region (62) in the first image, in which a portion (38) of the first beam region (32) is imaged, and
determining the beam width alignment furthermore in dependence on the second image region (64).

3. Method according to Claim 1 or 2, having the additional steps of:
selecting at least one third image region (64) in which a region (40) outside the beam region (32) is imaged, and
determining the beam width alignment furthermore in dependence on the third image region (64).

4. Method according to Claim 1 and 2, having the additional steps of:
determining a reflectance of a road surface (25) in dependence on the first, second and third image regions (50, 62, 64), and
determining the beam width alignment in dependence on the reflectance.

5. Method according to one of the preceding claims, having the additional steps of:
determining a topology of a road surface (24), and
determining the beam width alignment in dependence on the topology of the road surface (24).

6. Method according to one of the preceding claims, having the additional steps of:
capturing movements of the motor vehicle (10), and
determining the beam width alignment in dependence on the movements.

7. Method according to one of the preceding claims, having the additional steps of:
determining characteristic values (56) for data series of at least one of the image regions (50, 62, 64), wherein image lines of the respective image region (50, 62, 64) are used as data series, and sums of the data series of the respective image region are used by characteristic values for data series, and
determining the beam width alignment in dependence on the characteristic values.

8. Method according to one of the preceding claims, having the additional step of:
aligning the at least first headlight (20) in a predefined basic alignment.

9. Method according to one of the preceding claims, **characterized in that** a driver-side beam region (32) is used as the first beam region (32).

10. Control and evaluation unit (16) for determining a beam width alignment of at least one first headlight (20) of a motor vehicle (10), wherein the motor vehicle (10) has at least one optical sensor (12) which is configured to capture at least a portion (38) of a first beam region (32) of the first headlight (20) and to generate a first image with the portion (38) of the first beam region (32), wherein the control and evaluation unit (16) is configured to read the first image of the optical sensor (12), to determine at least one first image region (50) in the first image in which a light/dark boundary (28) of the first headlight (20) is imaged, and to determine the beam width alignment of the first headlight (20) in dependence on the first image region (50), **characterized in that** the control and evaluation unit (16) is configured to determine a desired alignment in dependence on a beam width alignment of a second headlight (20') and to align the first headlight (20) in dependence on the beam width alignment of the first headlight (20) and the desired alignment.

11. Computer program product having program code for performing a method according to one of the preceding claims if the program product is executed on an apparatus.

## Revendications

1. Procédé de détermination d'une orientation de faisceau de lumière d'au moins un projecteur (20) d'un véhicule automobile (10), dans lequel le véhicule automobile (10) comporte au moins un capteur optique (12) qui est conçu pour détecter au moins une partie (38) d'une première zone de lumière (32) du premier projecteur (20) et pour générer une première image comportant la partie (38) de la première zone de lumière (32), comprenant les étapes consistant à :
lire la première image du capteur optique (12),
sélectionner dans la première image au moins une première zone d'image (50), dans lequel une limite clair-obscur (28) du premier projecteur (20) est reproduite dans la première zone d'image (50), et
déterminer l'orientation du faisceau de lumière du premier projecteur (20) en fonction de la première zone d'image (50),
**caractérisé en ce que** le procédé comprend en outre les étapes consistant à :
déterminer une orientation nominale en fonction d'une orientation de faisceau de lumière d'un deuxième projecteur (20'), et
orienter le premier projecteur (20) en fonction de l'orientation de faisceau de lumière du premier projecteur (20) et de l'orientation nominale.

2. Procédé selon la revendication 1, comportant les étapes supplémentaires consistant à :
sélectionner dans la première image au moins une deuxième zone d'image (62) dans laquelle est reproduite une partie (38) de la première zone de lumière (32), et
déterminer en outre l'orientation de faisceau de lumière en fonction de la deuxième zone d'image (64).

3. Procédé selon la revendication 1 ou 2, comportant les étapes supplémentaires consistant à :
sélectionner au moins une troisième zone d'image (64) dans laquelle une zone (40) est reproduite à l'extérieur de la zone de lumière (32), et
déterminer en outre l'orientation de faisceau de lumière en fonction de la troisième zone d'image (64).

4. Procédé selon les revendications 1 et 2, comportant les étapes supplémentaires consistant à :
déterminer une réflectivité d'une surface routière (24) en fonction des première et troisième zones d'image (50, 62, 64), et
déterminer l'orientation de faisceau de lumière en fonction de la réflectivité.

5. Procédé selon l'une quelconque des revendications précédentes, comportant les étapes supplémentaires consistant à :
déterminer une topologie d'une surface routière (24), et
déterminer l'orientation de faisceau de lumière en fonction de la topologie de la surface routière (24).

6. Procédé selon l'une quelconque des revendications précédentes, comportant les étapes supplémentaires consistant à :
détecter des mouvements du véhicule automobile (10), et
déterminer l'orientation de faisceau de lumière en fonction des mouvements.

7. Procédé selon l'une quelconque des revendications précédentes, comportant les étapes supplémentaires consistant à :
déterminer des valeurs caractéristiques (56) pour des séries de données d'au moins l'une des zones d'image (50, 62, 64), dans lequel des lignes d'image de chaque zone d'image (50, 62, 64) sont utilisées en tant que série de données, et dans lequel des sommes des séries de données de chaque zone d'image sont utilisées en tant que valeurs caractéristiques pour les séries de données, et
déterminer l'orientation de faisceau de lumière en fonction des valeurs caractéristiques.

8. Procédé selon l'une quelconque des revendications précédentes, comportant les étapes supplémentaires consistant à :
orienter l'au moins un premier projecteur (20) suivant une orientation de base prédéfinie.

9. Procédé selon l'une quelconque des revendications précédentes, **caractérisé en ce qu'**une zone de lumière côté conducteur (32) est utilisée en tant que première zone de lumière (32).

10. Unité de commande et d'évaluation (16) destinée à déterminer une orientation de faisceau de lumière d'au moins un premier projecteur (20) d'un véhicule automobile (10), dans lequel le véhicule automobile (10) comporte au moins un capteur optique (12) qui est conçu pour détecter au moins une partie (38) d'une première zone de lumière (32) du premier projecteur (20) et pour générer une première image comportant la partie (38) de la première zone de lumière (32), dans lequel l'unité de commande et d'évaluation (16) est conçue pour lire la première image du capteur optique (12), déterminer au moins une première zone d'image (50) dans la première image en reproduisant une limite clair-obscur (28) du premier projecteur (20), et déterminer l'orientation de faisceau de lumière du premier projecteur (20) en fonction de la première zone d'image (50), **caractérisé en ce que** l'unité de commande et d'évaluation (16) est conçue pour déterminer une orientation nominale en fonction d'une orientation de faisceau de lumière d'un deuxième projecteur (20'), et pour orienter le premier projecteur (20) en fonction de l'orientation de faisceau de lumière du premier projecteur (20) et de l'orientation nominale.

11. Produit de programme d'ordinateur comportant un code de programme destiné à mettre en oeuvre le procédé selon l'une quelconque des revendications précédentes lorsque le produit de programme est exécuté sur un dispositif.
